(19) **Europäisches Patentamt**
**European Patent Office**
**Office européen des brevets**

(11) **EP 1 331 767 B1**

(12) **EUROPEAN PATENT SPECIFICATION**

(45) Date of publication and mention
of the grant of the patent:
**04.04.2007 Bulletin 2007/14**

(51) Int Cl.:
***H04L 12/56*** *(2006.01)* ***H04Q 7/38*** *(2006.01)*

(21) Application number: **02250557.2**

(22) Date of filing: **28.01.2002**

(54) **Method and apparatus for random access packet transmission by performing load control functionality**

Verfahren und Einrichtung zur wahlfreien Zugriffspaketübertragung durch Ausführung einer Laststeuerungsfunktionalität

Procédé et appareil de transmission de paquets d'accès aleatoire utilisant une fonctionalité de contrôle de charge

(84) Designated Contracting States:
**DE FR GB**

(43) Date of publication of application:
**30.07.2003 Bulletin 2003/31**

(73) Proprietor: **LUCENT TECHNOLOGIES INC.**
**Murray Hill, New Jersey 07974-0636 (US)**

(72) Inventors:
• **Bernhard, Urs Peter**
**90491 Nürnberg (DE)**
• **Cao, Qiang**
**Swindon,**
**Wiltshire SN2 3XL (GB)**

• **Mueckenheim, Jens**
**90411 Nürnberg (DE)**

(74) Representative: **Sarup, David Alexander**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**EP-A- 1 104 136        WO-A-01/63846**
**WO-A-97/16039**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The invention relates to a method of random access packet transmission in a packet switched mobile network and to an apparatus for a packet switched mobile network having such functionality.

In general, the invention addresses the problem of efficient packet transmissions of data flows in packet switched mobile networks for a transfer of data between a mobile station, also termed a user equipment (UE), and a local base transceiver station (BTS) in downlink, i.e. in direction to the mobile station, and/or in uplink, i.e. in direction to the base transceiver station.

As known, packet transmission is a key feature of communication systems of the third Generation such as UMTS, as defined by the 3GPP standard. Methods for improving packet transmission and its efficiency have been deployed on both downlink and uplink. On the downlink the radio access network usually has a complete knowledge of how much, when and to whom the packet transmissions are made.

For the uplink packet transmission however, where all user equipments or mobile stations are uncoordinated, a fully centralised controlled method, such as for example a scheduling based method, is not feasible.

However, a procedure is set forth in the MAC (medium access control) protocol specification for UMTS for gaining transmission access by making random packet transmission on a random access channel (RACH) and detecting, according to a collision detect multiple access process, whether the packet transmission is received and acknowledged by the receiver. If the transmission is unsuccessful, the transmitter trys the transmission again after a random time interval. The time interval is lengthened according to a persistency value, which is derived by the radio access network based on the served traffic volume. Consequently the uplink packet transmission can be controlled through persistency value broadcast on the downlink.

The principle of such persistency control is, that the radio access network monitors the uplink traffic load and broadcasts a persistency value, such-as for example the transmission probability, on the broadcast control channel (BCH). Based on the broadcast persistency information, the user equipments decide their own transmission probability or re-transmission probability, so that the packet access in the uplink, such as for example on the random access channel (RACH) and common packet channel (CPCH), can be controlled.

However, especially in CDMA (Code Division Multiple Access) based packet switched mobile communication systems like an universal mobile telecommunication system (UMTS) as defined by the 3GPP standard, there exist two main reasons for a system overload which additionally may result, in particular in the case of a long-term system overload, in problems of the packet transmission functionality.

Firstly, such a mobile communication system may become overloaded when a new user equipment has to be added and there are less free resources available then requested.

Secondly, the mobile communication system with existing data flows may become overloaded with regard to Quality of Service (QoS) metrics when the QoS compliant load offered by each existing data flow is larger than the average served load. In wire-line networks, this potential problem is typically bounded by the variation of the offered load and can be tackled by computing each data flow's activity with the contracted minimum QoS rate guarantees. In wireless networks however, usually the environmental conditions are changing, such as for example due to the mobility of the mobile stations. This in turn directly impacts, in particular in CDMA based systems, the airlink resource consumption and thus the entire system capacity. Since the mobility of the user equipments is hardly predictable any load balancing mechanism is crucial.

Thus, even if a given random access transmission system using a persistency control approach is adapted to keep the system stable in the case of an overload by decreasing the transmit probability, based for example on a high random access channel load, a significantly increased transmit delay may be caused thereby.

As a consequence, on the one hand , such a transmit delay might be uncritical in the case of a short-term overload, since a random access channel, such as for example the CPCH only serves data flows with a relaxed delay requirement, such as for example a TCP/IP (transmission control protocol/internet protocol) transmission.

On the other hand however, in the case of a long-term overload, this can cause an undesirable behaviour when the delay is growing beyond a certain level. Then for example, a TCP congestion control usually starts a retransmission of the whole TCP packet, which may lead to a substantial waste of air interface resources. The length of such a long-term period for entering the state of overload depends heavily on the system or network and the supported services.

Thus, up to now random access transmission procedures of packet switched mobile networks are only able to handle problems of potential short-term overload situations.

It is known from International (PCT) patent application publication WO97/16039 to provide a method of random access packet transmission for maintaining quality of service requirements in a UMTS packet switched mobile network, comprising the steps of:

performing on a respective random access packet transmission channel admission control dependent upon a request for the adding of a new data flow.

The present invention is characterised over the disclosure of WO97/16039 in that the admission control comprising the steps of determining the actual persistency value ($P_{pers\_actual}$), and comparing said value against a maximum persistency value threshold ($P_{pers\_max}$) multiplied by a safety factor of less than one for detecting whether adding the new data flow would cause an overload condition.

It is an object of the present invention to provide a new and improved approach to avoid problems of overload handling for a random access packet transmission in packet switched mobile networks, as described above and in particular, to limit the transmit delay of at least some selected data flows even in case of a long-term overload situation.

The inventive solution is achieved by a method and an apparatus incorporating the features of the independent claims respectively.

Advantageous and/or preferred embodiments or refinements are the subject matter of the respective dependent claims.

According to the invention for performing random access packet transmission, it is suggested to employ on a respective random access packet transmission channel an admission control functionality depending on a request for the adding of a new data flow and/or to employ on the respective random access packet transmission channel a congestion control functionality depending on varying environments, in particular based on the mobility of a mobile station served by the network for maintaining quality of service requirements and/or guarantees even in long-term overload situations of a packet switched mobile network, especially in a CDMA based network.

Accordingly, the such enhanced random access functionality is able to tackle problems caused in particular by long-term overload situations that can not be handled by known random access approaches.

For enabling a very easy but effective admission control functionality it is proposed to compare in case of a request for adding a new data flow an actual persistency value indicating the system loading, against an overload threshold to avoid an overload situation.

In particular by using the inventive admission control functionality depending on the request for adding a new data flow, a communication system having such enhanced random access control functionality for a mobile network can preserve a certain degree of quality of service (QoS), in particular in terms of limiting the transmission delay, for the active or ongoing data flows that are handled by the random access packet transmission processing system even in the case when a new data flow has to be added to the system.

Moreover, by the use of congestion control functionality the communication system having such enhanced random access control functionality can preserve a certain degree of quality of service for the active or ongoing data flows that are handled by the random access packet transmission processing system even in case the environmental conditions are changing, in particular based on the mobility of the mobile stations forming a specific problem of mobile communication networks such as UMTS.

Advantageously, the preferred method is adapted in that the control decisions are performed by using the random access channel load, since it can be obtained in several ways. Preferably, the actual random access channel load is estimated by regularly comparing a measured receiving power from user equipments on the random access transmission channel with a measured total receiving power from all user equipments of a cell and/or by counting the number of actually ongoing packet transmissions within a certain time interval.

According to a further preferred refinement of the invention, it is proposed to regularly perform a persistency control functionality in that the actual persistency value is increased or decreased for allocation to the respective random access packet transmission channel within defined upper and lower limits in dependence on a comparison of an actually estimated random access channel load against an defined upper random access channel load limit and/or that the actual persistency value is determined in dependence on the number of actually ongoing packet transmissions and the number of allowable new packets within a succeeding time interval on the respective random access packet transmission channel. Practically, by means of such persistency control functionality the invention additionally ensures that short-term overload situations are solved, in particular by allocating the persistency value for the actives data flows, that are handled by the inventive random access packet transmission approach depending on the current network load situation.

Preferably, the congestion control functionality is supervising the maintaining of the actual QoS requirements depending on the allocated persistency value for the comparison against an overload threshold during definable time frames for detecting an overload situation.

In particular in case of performing the admission control functionality in combination with the congestion control functionality, according to the very preferred refinement, the overload threshold comprises a safety factor for allowing a certain degree of reserve for the random access control functionality in order to avoid a "ping-pong" behaviour.

Moreover, according to a further advantageous refinement in case of detecting an overload condition the reduction of the offered traffic on the respective random access packet transmission channel is proposed in particular by removing at least one ongoing data flow and/or by rejecting the new data flow and/or by replacing at least one ongoing data flow by the new data flow, depending on a respective detected overload condition and/or quality of service guarantees.

According to a further improved enhancement, in particular in case of the allocation of a user equipment to more than one random access channel, it is suggested to perform admission control functionality and/or congestion control functionality on a plurality of random access packet transmission channels by comparing a set of actually estimated random access channel load based values, respectively allocated to one of the random access packet transmission channels against an overload threshold or an overload threshold including a safety factor for detecting an overload situation or condition.

Consequently, the main application of the inventive approach is a MAC (medium access control) level packet transmission system using a random access method, whereby the invention is especially suited for communication systems where the random access transmission probability is controlled by broadcasting a persistency value. As a further advantage however, the invention is not limited to such systems but can also be used in general packet transmission systems for efficient overload handling on MAC level.

The invention is furthermore providing a corresponding adapted apparatus comprising a transceiver unit having means for controlling random access packet transmission of data flows for complying with quality of service constraints and associated means for performing an admission control functionality depending on a request for the adding of a new data flow on a respective random access packet transmission channel and/or for performing a congestion control functionality depending on varying environments in compliance with the inventive method.

Subsequently, the invention is described in more detail based on a preferred embodiment and with regard to the accompanying drawings, in which:

Fig. 1 is schematically depicting a flow chart indicating a preferred admission control functionality according to the invention,

Fig. 2 is schematically depicting a flow chart indicating a preferred congestion control functionality according to the invention, and

Fig. 3 is schematically depicting a flow chart indicating a preferred persistency control functionality according to the invention.

Subsequently, the invention is exemplary described based on an preferred application, in particular implemented in the CDMA packet switched mobile communication UMTS system having random access packet transmission procedures as specified by the current 3GPP standards and designed for the Common Packet Channel (CPCH).

Based on such exemplar application and as an assumption for the following description, it is mentioned that, the random access transmission generally is controlled by a persistency value called $P_{Pers}$. This persistency value usually is broadcast on the broadcast channel, i.e. on the BCH.

Furthermore, a load "load" is defined on the CPCH, wherein the load "load" is the fraction of the received power $P_{CPCH}$ from all user equipments (UE) on the CPCH at the BTS which is called NodeB in UMTS, to the total received wideband power $P_{total}$ from all user equipments of the respective associated cell at the BTS or NodeB.

Thus the load "load" can be expressed as

$$\text{load} = \frac{P_{CPCH}}{P_{total}} \qquad\qquad \text{equation 1}$$

For limiting the interference from the user equipments on CPCH to the user equipments on other channels of that cell, for example on a circuit switched dedicated channel (DCH), the power $P_{CPCH}$ on the CPCH and hence, the load "load" can be limited.

Furthermore, it is mentioned that the load "load" is directly proportional to the transmit probability $P_{transmit}$ due to:

$$\text{load} \propto N_{CPCH} * P_{transmit} \qquad\qquad \text{equation 2}$$

In equation 2, the parameter $N_{CPCH}$ denotes the number of user equipments which are allocated to CPCH. In general, this number is known. The transmit probability $P_{transmit}$ can be determined by the persistency value preferably using the following relation that is specified in the current 3GPP UMTS standards.

$$P_{transmit} = 2^{-(P_{Pers} - 1)} \qquad\qquad \text{equation 3}$$

Currently, the range of the persistency value is defined by:

$$1 \le P_{Pers} \le 8 \qquad \text{equation 4}$$

As a first consequence the load "load", based on equations 2 and 3, is inversely to the persistency value $P_{Pers}$, and thus:

$$\text{load} \propto 1/P_{Pers} \qquad \text{equation 5}$$

and hence, the load "load" can be controlled by properly adjusting the persistency value $P_{Pers}$.

It is however a further consequence, that a caused delay of a packet transmission will be a decreasing function of the transmit probability $P_{transmit}$. In particular in slotted systems, the transmit delay is geometrical distributed, such as for the example of the random access transmission system where a transmission can only start at pre-defined times. Thus, a mean delay "delay" is inversely proportional to the transmit probability $P_{transmit}$ and thus:

$$\text{delay} \propto 1/P_{transmit} \qquad \text{equation 6}$$

Consequently, based on equations 3 and 6 it should be obvious for a person skilled in the art, that the packet transmission delay "delay" is an increasing function of the persistency value $P_{Pers}$ and hence, the parameter "delay" can be seen in substantial as being proportional to $P_{Pers}$.

Accordingly, the higher the persistency value $P_{Pers}$, the longer is the packet transmission delay "delay". As a result, there is a trade-off between the load "load" and the packet transmission delay "delay" when assigning the persistency value $P_{Pers}$, which has to be regarded by the inventive embodiment of employing a specific load controlling approach for the CPCH random access packet transmission functionality.

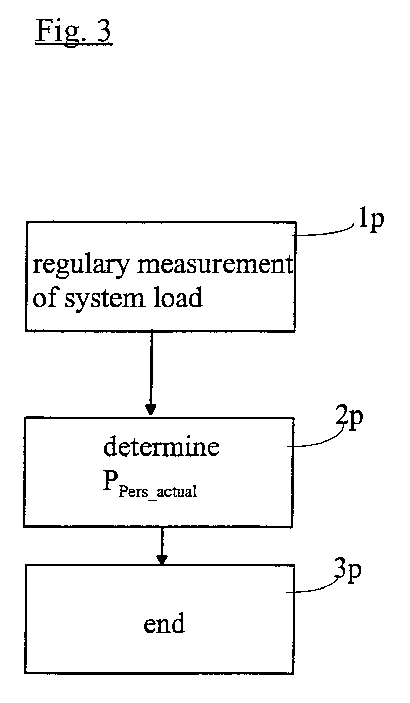

Regarding first to Fig. 3, the principle of a persistency control functionality preferably integrated within the inventive way of enhanced random access packet transmission is schematically depicted.

The preferred persistency control functionality, as depicted, should be as follows.

The persistency control procedure is adapted in that during the operation of the transmission network and according to Fig. 3 step 1p, the radio access network regularly checks or estimates the random access channel load "load". The persistency control functionality is triggered, when a new estimate of the random access channel load "load" is achieved.

One of the most practical ways of checking or estimating the random access channel load "load" comprises the measurement of the received powers $P_{CPCH}$ and $P_{total}$ and the use of equation 1 for the estimation of the load "load".

However, a further possibility for the estimation of a load indicating value is based on the counting of the number of access attempts $N_{current}$ on the CPCH within a certain time interval, for example:

$$\text{load} = \frac{N_{current}}{N_{max}} \qquad \text{equation 7}$$

wherein $N_{max}$ represents the maximum allowed number of access attempts on the CPCH.

In general, the time period of the regular measurements concerning the load is denoted for the following description as the persistency control interval.

Based on the regular measurements, a preferred actual persistency value $P_{Pers\_actual}$ is determined using the estimated random access channel load "load", as indicated in Fig. 3 by reference sign 2p.

Furthermore, a preferred basic procedure therefore, is to use a comparison of the estimated load "load" against a given or definable maximal load threshold $load_{max}$, such as for example:

$$load \leq load_{max} \qquad\qquad equation\ 8$$

If equation 8 is not met, then an increment of the actual persistency value $P_{Pers\_actual}$ by one is performed. However, according to equation 4, in the current 3GPP UMTS standards the persistency value $P_{Pers}$ is set between 1 and 8. Thus a maximal or upper limit persistency value threshold is properly defined as being $P_{Pers\_max} = 8$. Thus, when performing the increment of the actual persistency value $P_{Pers\_actual}$ by one, it has to be ensured, that $P_{Pers\_actual}$ is not exceeding $P_{Pers\_max}$.

If however, equation 8 is met as a result of the determination step 2p, then a decrement of the actual persistency value $P_{Pers\_actual}$ by one is performed. However, since the persistency value $P_{Pers}$ is set between 1 and 8, a minimal or lower limit persistency value threshold is preferably defined, properly as being $P_{Pers\_low} = 1$. Thus, when performing the decrement of the actual persistency value $P_{Pers\_actual}$ by one, it has to be ensured, that $P_{Pers\_actual}$ is not lowering $P_{Pers\_low}$.

As a result, the persistency control procedure is finished for the moment as indicated by reference sign 3p of Fig. 3 and is waiting until a new random access channel load estimate is obtained. The determined and actualised persistency value $P_{Pers\_actual}$ is however, signalled to the mobile user equipments practically via the system broadcast channel BCH.

However, a further practical approach for determining a persistency value can be derived from the above mentioned number of access attempts $N_{current}$. For example, the allowed maximal uplink load threshold level is given as:

$$P_{total\_max} = function(load_{max}) \qquad\qquad equation\ 9$$

and hence is a system design parameter, which can be derived from the maximum cell load. Then, based on a homogeneous traffic pattern for circuit traffic, a current surplus power can be expressed as:

$$P_{total\_max} - P_{total} \qquad\qquad equation\ 10.$$

With the assumption, that all of the surplus power is consumed by newly arrived packet transmission, the number of new packets that can be allowed for the next transmission interval can be defined as:

$$N_{next} = \frac{P_{total\_max} - P_{total}}{P_{CPCH}} \cdot N_{current} \qquad\qquad equation\ 11$$

Since all user equipments will re-transmit in case of backlogged user equipments and/or transmit in case of new user equipments with the same transmit probability, a persistency transmission probability value $P_{transmit}$ for a random access channel can be defined as:

$$P_{transmit} = \frac{1}{N_{current} + N_{next}} \cdot N_{access} \qquad\qquad equation\ 12.$$

wherein $N_{access}$ is the number of available access slots and/or access codes on the CPCH. Then the actual persistency value $P_{Pers\_actual}$ is derived from equation 3.

Subsequently, the principal of the inventive, in particular software implemented, approach of additionally employing a load controlled random access packet transmission concerning an admission control functionality and/or congestion control functionality is described.

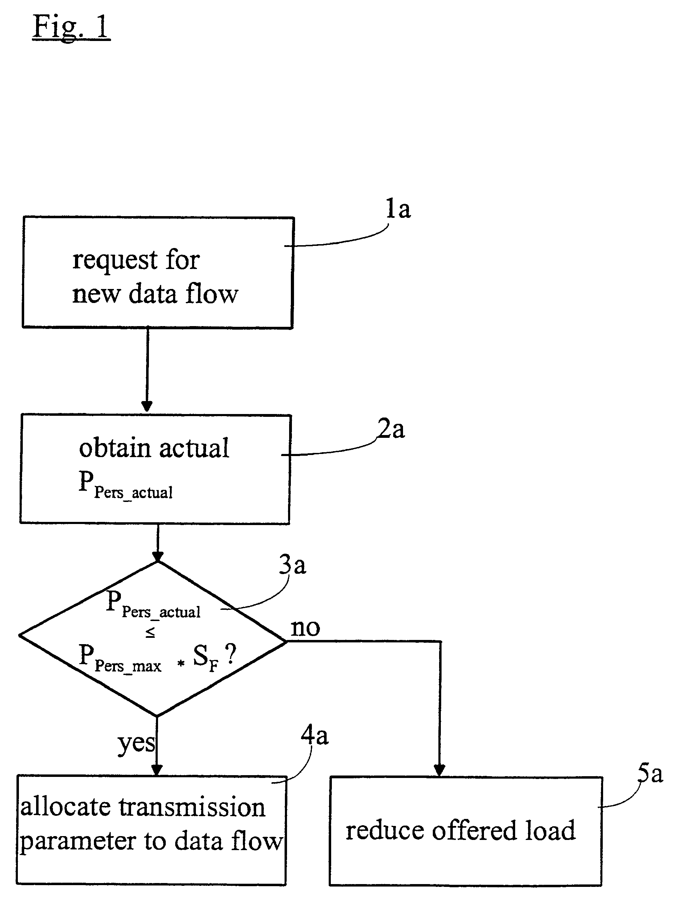

Regarding Fig. 1, the preferred, realisation of the inventive admission control functionality within the random access packet transmission functionality, based on a request for the adding of a new data flow to be transmitted, employs the persistency value $P_{Pers\_actual}$ and is as follows:

The admission control functionality is triggered in a first step 1a, when a request for adding a new data flow to the CPCH arrives. Then, in a second step 2a the actual persistency value $P_{Pers\_actual}$ allocated by the persistency control functionality within the respective last persistency control interval, as described above, is taken as a basis for the indication of the random access channel load and hence, for performing the control functionality.

Subsequently, during a third step 3a the means for performing such admission control functionality, practically embedded in a respective transceiver unit of a base transceiver station of the communication system, preferably is checking whether the adding of the new data flow would lead to an overload condition. A possible admission criterion according to the invention could be:

$$P_{Pers\_actual} \leq P_{Pers\_max} \cdot S_F \qquad \text{equation 13}$$

wherein $P_{Pers\_max}$ is the maximal persistency value for the maximal allowable delay limit and $S_F$ is a safety factor which preferably is set to $S_F < 1$ to allow a certain degree of reserve for the random access control means in order to avoid any undesired "ping-pong" behaviour when the admission control is combined with the inventive congestion control functionality, as described below.

If equation 13 is met, then the new requested data flow will not violate the allowable delay limits and hence, can be admitted. As a consequence, it can be proceeded with step 4a, according to which the request for adding the new data flow has been admitted and the transmission parameters, such as for example the data rates, the transport formats and spreading codes are allocated. The transmission parameters are then signalled, preferably together with a specific CPCH identification to the mobile user equipment that has requested the data flow on the CPCH.

If however, equation 13 is not met as a result of the checking step 3a, then in case of adding the new request the delay limits will be violate and hence, the request can not be admitted. As a consequence it is proceeded with step 5a of Fig. 1 trying to perform a reduction of the offered random access channel load for enabling the system to limit the actual delay preferably including at least one of the two following actions:

Firstly, one approach for reducing the offered random access channel load is, to simply reject the new request. This may be the preferred controlling functionality in the general case, where all ongoing traffic should get priority over a new request.

Secondly, another possibility according to the invention is to remove one or more ongoing data flows from the CPCH in order to insert the new one. This may be the preferred option for handling calls with priority, such as for example emergency calls, where resources shall be pre-empted in order to proceed the priority call.

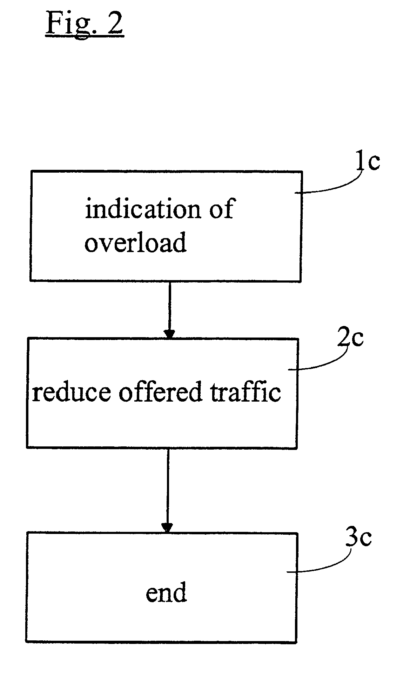

Regarding Fig. 2 the principle of the inventive random access packet transmission approach of employing congestion control functionality is schematically depicted. A preferred control functionality based on the exemplar CPCH of a UMTS based transmission system is proposed to be as follows.

During the operation of the transmission network, the congestion control procedure according to Fig. 2 is triggered in a first step 1c when the random access control means indicates an overload situation on the CPCH, for example by use of the persistency control functionality, as described above with regard to Fig. 3.

Thus, for indicating any overload situation the random access packet transmission functionality preferably is adapted to regularly check the allocated persistency value $P_{Pers}$.

Normally, the time frame for performing this check will be much larger than the persistency control interval, because the CPCH usually is only in an overload situation, if it can not serve the "long-term" delay requirements of the data flows. Short term fluctuations can be autonomously handled by the persistency control functionality, as described above. If the control means however, is not able to serve all data flows during a longer time with the maximal allowable delay, the control means indicates the overload situation.

For indicating such an overload situation, preferably by use of the persistency value $P_{Pers}$ in general, it is proposed to use the actual obtained persistency value $P_{Pers\_actual}$ for defining an overload criterion as follows:

$$P_{Pers\_actual} \geq P_{Pers\_max} \qquad \text{equation 14}$$

As in the admission control functionality, the $P_{Pers\_max}$ is the maximal persistency value, which is for example given by the maximal allowable delay limit. If equation 14 is valid over a longer time-scale, the persistency control indicates the overload situation. The length of this time-duration for entering the state of overload depends heavily on the system and the services in the respective system and hence, must be set according to actual requirements.

As a result, the congestion control procedure is finished for the moment, as indicated by reference sign 3c of Fig. 2 and is waiting until a new overload situation is indicated by the scheduling functionality.

However, for overcoming an indicated overload situation, i.e. the given delay limits are not complied anymore, the offered traffic must be reduced, as indicated by reference sign 2c. One preferred approach therefore is to remove one or several data flows from the CPCH, preferably in dependence on a priority scheme or order, such as for example to drop the data flows having the lowest priority at first, in order to reduce the random access channel load and hence to decrease the actual persistency value $P_{Pers\_actual}$. Another preferred approach is, to drop the data flows first, that are associated to the maximum transmit power for reducing the interference in the system.

Based thereon it is necessary to remove so many data flows that the persistency value $P_{Pers\_actual}$ is reduced below an definable congestion control based persistency value $P_{Pers\_ConC}$ prior to proceed further with step 3c, i.e. to finish the congestion control procedure for the moment and to wait until a new overload situation is indicated by the control means. However, a user equipment, which is removed from the CPCH is informed via dedicated signalling channels.

By combining the congestion control functionality with the admission control functionality, an overload situation according to step 1c of Fig. 2 even can be indicated in case of a transition from step 3a of Fig. 1 to step 5a due to a request for adding a new data flow.

Thus, it is obvious for a person skilled in the art that in case of combining both load control functionality's, the safety factor $S_F$ used in equation 13 during step 3a of Fig. 1 should be less than 1 to avoid the afore-mentioned "ping-pong" behaviour. Otherwise, if $S_F$ is set to 1, the incorporation of a requested new data flow into the random access process, in particular by an actual need of the entire maximum persistency value $P_{Pers\_max}$ according to equation 13, may result in the detection of an overload situation by the congestion control functionality during a succeeding step.

In the exemplar inventive approach as described above only one CPCH has formed the basis for the inventive control functionality. However, according to the current 3GPP UMTS standards and/or specifications even the allocation of at least one certain mobile user equipment to more than one CPCH, i.e. to a CPCH set, is allowed. The respective user equipment then chooses the CPCH for the transmission out of the allocated CPCH set according to a defined or definable allocation rule.

In this case, one preferred approach is to allocate a certain number of CPCH serving equal data rate. Based thereon, on each CPCH out of the CPCH set, an autonomous persistency control function may be applied according to the above description concerning to Fig. 3. Then, it may be beneficial for the user equipment to use the inventive random access attempt on that CPCH where the lowest persistency value $P_{Pers\_actual}$ has been allocated, since this CPCH is likely lowest loaded for balancing the traffic between the specific CPCH within the CPCH set.

As a consequence, in such a case, the admission control functionality as described above with regard to Fig. 1 is proposed to be further enhanced in that not only the persistency value $P_{Pers\_actual}$ on one CPCH has to be obtained but additionally the persistency values on the other CPCHs of the CPCH set.

With the assumption, that the total number of CPCHs of a CPCH set is k, the respective persistency value of a CPCH#i is $P_{Pers\_actual}(i)$ and each CPCH#i has a maximal persistency value $P_{Pers\_max}(i)$, wherein each of the maximal persistency values $P_{Pers\_max}(i)$ can be the same, i.e. $P_{Pers\_max}(i) = P_{Pers\_max}$, the criterion in equation 13 preferably is adapted to:

$$P_{Pers\_actual}(i) \leq P_{Pers\_max}(i) \cdot S_F \qquad\qquad \text{equation 15}$$

This means, that the admission criterion is fulfilled for a CPCH#i when equation 15 is met for the respective $i \leq k$.

Furthermore, regarding the inventive congestion control functionality, the overload check, as described above based on Fig. 2, can be performed for all CPCHs within a CPCH set at once and hence, the congestion control functionality can be adapted similar to the enhanced approach relating to the admission control functionality.

Consequently, based on the afore-mentioned assumption, the congestion control criterion in equation 14 preferably is adapted to:

$$P_{Pers\_actual}(i) \geq P_{Pers\_max}(i) \qquad\qquad \text{equation 16}$$

and means, that an overload situation is indicated for a CPCH#i when equation 16 is valid for the respective $i \leq k$.

Moreover, even the invention is exemplary described with regard to a random access transmission UMTS system on CPCH, it is obvious for a person skilled in the art, that substantially the same inventive functionality can be applied to control a packet transmission in general on transport channels, which are based on random access procedures for a known number of user equipments, such as for example for the DRAC (dynamic resource allocation control) procedure on uplink DCH (dedicated channel) as specified in the current 3GPP UMTS standards.

**Claims**

1. A method of random access packet transmission for maintaining quality of service requirements in a UMTS packet switched mobile network, comprising the steps of:

   performing on a respective random access packet transmission channel admission control (1a, 2a, 3a, 4a, 5a) dependent upon a request for the adding of a new data flow **characterised by** the admission control comprising the steps of determining (2a) the actual persistency value ($P_{pers\_actual}$), and comparing said value against a maximum persistency value threshold ($P_{pers\_max}$) multiplied by a safety factor ($S_F$) of less than one for detecting whether adding the new data flow would cause an overload condition.

2. The method of claim 1, further **characterised by** the admission control being dependent upon an estimated random access channel load on the respective random access packet transmission channel.

3. The method of claim 1 or claim 2, further **characterised by** the step of regularly performing a persistency control in which an actual persistency value ($P_{pers\_actual}$) for allocation to the respective random access packet transmission channel is increased or decreased (2p) within defined upper and lower limits in dependence on a comparison of an estimated random access channel load against defined upper random access channel load limit.

4. The method of any preceding claim, further **characterised by** the step of regularly performing a persistency control in which an actual persistency value ($P_{pers\_actual}$) for allocation to the respective random access packet transmission channel is obtained by determining the number of actually ongoing packet transmissions and the number of allowable new packets within a succeeding time interval on the respective random access packet transmission channel.

5. The method of any of the preceding claims, further **characterised by** estimating the actual random access channel load by comparing a measured receiving power from user equipments on the random access transmission channel with a measured total receiving power from all user equipments of a cell and/or by counting the number of actually ongoing packet transmissions within a certain time interval.

6. The method of any of the preceding claims, further comprising the steps of performing admission control on a plurality of random access packet transmission channels by comparing a set of actually estimated random access channel load based values, respectively allocated to one of the random access packet transmission channels against an overload threshold of a maximum persistency value $P_{pers\_max}$ multiplied by a safety factor ($S_F$) of less than one, for detecting an overload condition.

7. The method of any preceding claim, comprising performing congestion control on the respective random access packet transmission channel.

8. The method of claim 7, wherein the step of performing congestion control comprises the step of supervising (1c) compliance with the QoS requirements by comparing the actual persistency value ($P_{pers\_actual}$) with a maximum persistency value threshold ($P_{pers\_max}$) during definable time frames for detecting an overload condition.

9. Apparatus for a UMTS packet switched mobile network comprising a transceiver unit having means for controlling random access packet transmission of data flows for complying with quality of service constraints and associated means for performing admission control dependent upon a request for the adding of a new data flow on a respective random access packet transmission channel, **characterised in that** the means for performing admission control comprises means operative to determine the actual persistency value ($P_{pers\_actual}$) and comparison means operative to compare said actual persistency value against a maximum persistency value threshold ($P_{pers\_max}$) multiplied by a safety factor ($S_F$) of less than one for detecting whether adding the new data flow would cause an overload condition.

**Patentansprüche**

1. Verfahren zur Direktzugriffs-Paketübertragung zur Aufrechterhaltung von Dienstqualitätsanforderungen in einem paketvermittelten UMTS-Mobilnetz, mit den folgenden Schritten:

Durchführen einer Zulassungsregelung (1a, 2a, 3a, 4a, 5a) auf einem jeweiligen Direktzugriffs-Paketübertragungskanal abhängig von einer Anforderung des Hinzufügens eines neuen Datenflusses, **dadurch gekennzeichnet, daß** die Zulassungsregelung die folgenden Schritte umfaßt: Bestimmen (2a) des tatsächlichen Persistenzwerts ($P_{pers\_actual}$) und Vergleichen des Werts mit einer maximalen Persistenzwertschwelle ($P_{pers\_max}$), multipliziert mit einem Sicherheitsfaktor ($S_F$) von weniger als eins, zur Erkennung, ob das Hinzufügen des neuen Datenflusses zu einem Überlastzustand führen würde.

**2.** Verfahren nach Anspruch 1, ferner **dadurch gekennzeichnet, daß** die Zulassungsregelung von einer geschätzten Direktzugriffs-Kanallast auf dem jeweiligen Direktzugriffs-Paketübertragungskanal abhängt.

**3.** Verfahren nach Anspruch 1 oder Anspruch 2, ferner **gekennzeichnet durch** den Schritt des regelmäßigen Durchführens einer Persistenzregelung, bei der ein tatsächlicher Persistenzwert ($P_{pers\_actual}$) zur Vergabe an den jeweiligen Direktzugriffs-Paketübertragungskanal abhängig von einem Vergleich einer geschätzten Direktzugriffs-Kanallast mit einer definierten oberen Direktzugriffs-Kanallastgrenze innerhalb definierter Ober- und Untergrenzen vergrößert oder verkleinert wird (2p).

**4.** Verfahren nach einem der vorhergehenden Ansprüche, ferner **gekennzeichnet durch** den Schritt des regelmäßigen Durchführens einer Persistenzregelung, bei der ein tatsächlicher Persistenzwert ($P_{pers\_actual}$) zur Vergabe an den jeweiligen Direktzugriffs-Paketübertragungskanal **durch** Bestimmen der Anzahl tatsächlich ablaufender Paketübertragungen und der Anzahl zulässiger neuer Pakete in einem nachfolgenden Zeitintervall auf dem jeweiligen Direktzugriffs-Paketübertragungskanal erhalten wird.

**5.** Verfahren nach einem der vorhergehenden Ansprüche, ferner **gekennzeichnet durch** Schätzung der tatsächlichen Direktzugriffs-Kanallast **durch** Vergleichen einer gemessenen Empfangsleistung von Benutzergeräten auf dem Direktzugriffs-Übertragungskanal mit einer gemessenen Gesamtempfangsleistung von allen Benutzergeräten einer Zelle und/oder **durch** Zählen der Anzahl tatsächlich ablaufender Paketübertragungen in einem bestimmten Zeitintervall.

**6.** Verfahren nach einem der vorhergehenden Ansprüche, ferner mit den folgenden Schritten: Durchführen von Zulassungsregelung auf mehreren Direktzugriffs-Paketübertragungskanälen durch Vergleichen einer Menge von auf der tatsächlich geschätzten Direktzugriffs-Kanallast basierenden Werten, die jeweils an einen der Direktzugriffs-Paketübertragungskanäle vergeben werden, mit einer Überlastschwelle eines maximalen Persistenzwerts ($P_{pers\_max}$), multipliziert mit einem Sicherheitsfaktor ($S_F$) von weniger als eins, zur Erkennung eines Überlastzustands.

**7.** Verfahren nach einem der vorhergehenden Ansprüche mit dem Schritt des Durchführens einer Stauregelung auf dem jeweiligen Direktzugriffs-Paketübertragungskanal.

**8.** Verfahren nach Anspruch 7, wobei der Schritt des Durchführens der Stauregelung den folgenden Schritt umfaßt: Kontrollieren (1c) der Einhaltung der QoS-Anforderungen durch Vergleichen des tatsächlichen Persistenzwerts ($P_{pers\_actual}$) mit einer maximalen Persistenzwertschwelle ($P_{pers\_max}$) während definierbarer Zeitrahmen zur Erkennung eines Überlastzustands.

**9.** Vorrichtung für ein paketvermitteltes UMTS-Mobilnetz mit einer Sender-/Empfängereinheit, die folgendes aufweist:

ein Mittel zum Regeln der Direktzugriffs-Paketübertragung von Datenflüssen, um Dienstqualitätseinschränkungen einzuhalten, und
ein assoziiertes Mittel zum Durchführen einer Zulassungsregelung abhängig von einer Anforderung des Hinzufügens eines neuen Datenflusses auf einem jeweiligen Direktzugriffs-Paketübertragungskanal, **dadurch gekennzeichnet, daß** das Mittel zum Durchführen der Zulassungsregelung folgendes umfaßt: ein Mittel zum Bestimmen des tatsächlichen Persistenzwerts ($P_{pers\_actual}$) und ein Vergleichsmittel zum Vergleichen des tatsächlichen Persistenzwerts mit einer maximalen Persistenzwertschwelle ($P_{pers\_max}$), multipliziert mit einem Sicherheitsfaktor ($S_F$) von weniger als eins, zur Erkennung, ob das Hinzufügen des neuen Datenflusses zu einem Überlastzustand führen würde.

**Revendications**

1. Procédé de transmission de paquets d'accès aléatoire pour maintenir des exigences de qualité de service dans un réseau mobile à commutation de paquets UMTS, comprenant les étapes de :

   réalisation d'une régulation respective d'admission de canal de transmission de paquets d'accès aléatoire (1a, 2a, 3a, 4a, 5a) dépendante d'une demande pour l'ajout d'un nouveau flux de données **caractérisé par** la régulation d'admission comprenant les étapes de détermination (2a) de la valeur de persistance réelle ($P_{pers\_reelle}$) et de comparaison de ladite valeur par rapport à un seuil de valeur de persistance maximale ($P_{pers\_max}$) multiplié par un facteur de sécurité ($S_F$) inférieur à un pour détecter si l'ajout du nouveau flux de données doit causer une condition de surcharge.

2. Procédé selon la revendication 1, **caractérisé en outre par** la régulation d'admission étant dépendante d'une charge estimée de canal d'accès aléatoire sur le canal respectif de transmission de paquets d'accès aléatoire.

3. Procédé selon la revendication 1 ou la revendication 2, **caractérisé en outre par** l'étape de réalisation régulièrement d'une régulation de persistance dans laquelle une valeur de persistance réelle ($P_{pers\_reelle}$) pour une attribution au canal respectif de transmission de paquets d'accès aléatoire est augmentée ou diminuée (2p) dans des limites supérieure et inférieure définies en dépendance d'une comparaison d'une charge estimée de canal d'accès aléatoire par rapport à une limite de charge de canal d'accès aléatoire supérieure définie.

4. Procédé selon l'une quelconque des revendications précédentes, **caractérisé en outre par** l'étape de réalisation régulièrement d'une régulation de persistance dans laquelle une valeur de persistance réelle ($P_{Pers\_reelle}$) pour une attribution au canal respectif de transmission de paquets d'accès aléatoire est obtenue par la détermination du nombre de transmissions de paquets réellement en cours et du nombre de nouveaux paquets attribuables dans un intervalle de temps suivant sur le canal respectif de transmission de paquets d'accès aléatoire.

5. Procédé selon l'une quelconque des revendications précédentes, **caractérisé en outre par** l'estimation de la charge réelle de canal d'accès aléatoire par la comparaison d'une puissance de réception mesurée provenant des équipements d'utilisateur sur le canal de transmission d'accès aléatoire avec une puissance de réception totale mesurée provenant de tous les équipements d'utilisateurs d'une cellule et/ou le comptage du nombre de transmissions de paquets réellement en cours dans un certain intervalle de temps.

6. Procédé selon l'une quelconque des revendications précédentes, comprenant en outre les étapes de réalisation d'une régulation d'admission sur une pluralité de canaux de transmission de paquets d'accès aléatoire par la comparaison d'un ensemble de valeurs basées sur la charge de canal d'accès aléatoire réellement estimée, attribuées respectivement à un des canaux de transmission de paquets d'accès aléatoire par rapport à un seuil de surcharge d'une valeur de persistance maximale ($P_{pers\_max}$) multipliée par un facteur de sécurité ($S_F$) inférieur à un, pour détecter une condition de surcharge.

7. Procédé selon l'une quelconque des revendications précédentes, comprenant la réalisation d'une régulation de l'encombrement sur le canal respectif de transmission de paquets d'accès aléatoire.

8. Procédé selon la revendication 7, dans lequel l'étape de réalisation d'une régulation de l'encombrement comprend l'étape de supervision (1c) de la conformité avec les exigences QoS par la comparaison de la valeur de persistance réelle ($P_{pers\_reelle}$) avec un seuil de valeur de persistance maximale ($P_{pers\_max}$) pendant des trames temporelles définissables pour détecter une condition de surcharge.

9. Appareil pour un réseau mobile à commutation de paquets UMTS comprenant une unité d'émetteur-récepteur ayant des moyens pour réguler une transmission de paquets d'accès aléatoire de flux de données pour se conformer à des contraintes de qualité de services et
   des moyens associés pour réaliser une régulation d'admission dépendante d'une demande pour l'ajout d'un nouveau flux de données sur un canal respectif de transmission de paquets d'accès aléatoire, **caractérisé en ce que** les moyens pour réaliser la régulation d'admission comprennent des moyens opérationnels pour déterminer la valeur de persistance réelle ($P_{pers\_reelle}$) et des moyens de comparaison opérationnels pour comparer ladite valeur de persistance réelle par rapport à un seuil de valeur de persistance maximale ($P_{pers\_max}$) multiplié par un facteur de sécurité ($S_F$) inférieur à un pour détecter si l'ajout du nouveau flux de données doit causer une condition de surcharge.

# Fig. 1

request for
new data flow — 1a

↓

obtain actual
$P_{Pers\_actual}$ — 2a

↓

$P_{Pers\_actual} \leq P_{Pers\_max} * S_F$ ? — 3a

no →

yes ↓

allocate transmission
parameter to data flow — 4a

reduce offered load — 5a

## Fig. 2

```
┌─────────────────────┐
│  indication of      │  1c
│  overload           │
└─────────────────────┘
          │
          ▼
┌─────────────────────┐
│  reduce offered traffic │  2c
└─────────────────────┘
          │
          ▼
┌─────────────────────┐
│       end           │  3c
└─────────────────────┘
```

# Fig. 3

```
┌─────────────────────────────┐
│ regulary measurement        │ ⌐ 1p
│ of system load              │
└─────────────────────────────┘
              │
              ▼
┌─────────────────────────────┐
│        determine            │ ⌐ 2p
│  P_Pers_actual              │
└─────────────────────────────┘
              │
              ▼
┌─────────────────────────────┐
│           end               │ ⌐ 3p
└─────────────────────────────┘
```